# EUROPÄISCHE PATENTSCHRIFT

(11) **EP 2 527 291 B1**
(45) Veröffentlichungstag und Bekanntmachung des Hinweises auf die Patenterteilung: **23.10.2013**
(21) Anmeldenummer: 11167350.5
(22) Anmeldetag: 24.05.2011
(51) Int. Cl.: C01B 3/00, B01J 8/46, B01J 19/00, B01J 19/22

(54) **Lager- und/oder Transportbehälter für Wasserstoff**
Storage and transport container for hydrogen
Récipient de stockage et/ou de transport pour hydrogène

(43) Veröffentlichungstag der Anmeldung: 28.11.2012
(73) Patentinhaber: Helmholtz-Zentrum Geesthacht Zentrum für Material- und Küstenforschung GmbH, 21502 Geesthacht (DE)
(72) Erfinder: Barkhordarian, Gagik, 21502 Geesthacht (DE); Dornheim, Martin, 21391 Reppenstedt (DE); Klassen, Thomas, 21465 Wentorf (DE)
(74) Vertreter: UEXKÜLL & STOLBERG

(56) Entgegenhaltungen:
- EP-A1- 1 367 025
- EP-A2- 1 550 634
- GB-A- 1 568 374
- US-A- 4 318 890
- US-A1- 2008 075 987

## Beschreibung

### Hintergrund der Erfindung

Die vorliegende Erfindung betrifft Lager- und/oder Transportbehälter für Wasserstoff.

Die Energiespeicherung mittels Wasserstoff gewinnt in jüngster Zeit immer mehr an Bedeutung. Es gibt heute verschiedene Methoden, um Wasserstoff zu speichern, bei denen zwischen der Speicherung in gasförmigem, flüssigem oder in Form von Metallhydriden in chemisch gebundenem Zustand unterscheiden werden kann. Die Speicherung von gasförmigen oder flüssigen Wasserstoff führt oft zu Sicherheitsproblemen. Vorteilhaft sind daher Wasserstoffspeichersysteme, in denen Wasserstoff in Form von Metallhydriden in chemisch gebundenem Zustand gespeichert vorliegt. Derartige Metallhydrid-Wasserstoffspeicher weisen einen mit Wasserstoff angereicherten Speicherzustand, in denen Wasserstoff als Metallhydrid gebunden vorliegt, und einen mit Wasserstoff abgereicherten Nichtspeicherzustand auf, zwischen denen sie im Wesentlichen reversibel überführbar sind.

Speicher mit einer Metallhydridfüllung unterliegen nicht den hohen Anforderungen an Isolation oder Druck wie Wasserstoffspeichersysteme zur Speicherung von gasförmigem oder flüssigem Wasserstoff. Das effektive Druckniveau bewegt sich zwischen 5 und 50 bar und die auftretenden Temperaturen zur Absorption und Desorption des Wasserstoffs liegen zwischen 20°C und etwa 280°C, je nach verwendetem Hydrid.

Die Überführung des Wasserstoffspeichers aus dem Nichtspeicherzustand in den Speicherzustand verläuft *exotherm.* Daher muss die Reaktionswärme abgeführt werden, um einen Stillstand der Reaktion zu vermeiden. Für die Entnahme des Wasserstoffs ist dann wieder die Zufuhr von Wärmeenergie notwendig, da die Reaktion *endotherm* verläuft.

Die für die zur Entnahme des Wasserstoffs erforderliche Wärme wird bei konventionellen Metallhydridtanks über die Außenhülle des Metallhydridtanks und/oder über in den Tank eingelassene Heizstäbe zugeführt. Dies hat den Nachteil, dass der Wärmetransfer von der Beschaffenheit des Materials abhängt und auch Bereiche beheizt werden, die schon Wasserstoff abgegeben haben, was zu einer unerwünscht niedrigen Energieeffizienz führt. Ferner ist die Kontrolle der Reaktion zur Abgabe von Wasserstoff durch Einstellen oder Erhöhen der Wärmezufuhr nur unter Zeitverzögerung möglich.

Aufgabe der vorliegenden Erfindung ist es daher ein Lager-und/oder Transportbehälter für Wasserstoff bereitzustellen, bei dem diese Nachteile nicht auftreten, so dass die Verwendung von Metallhydridtanks für mobile Applikationen verwendbar wird.

### Zusammenfassung der Erfindung

Gelöst wird die Aufgabe durch einen Lager- und/oder Transportbehälter für Wasserstoff, wobei der Wasserstoff in Form eines Metallhydrid-Wasserstoffspeichermaterials gespeichert wird, das einen mit Wasserstoff angereicherten Speicherzustand und einen mit Wasserstoff abgereicherten Nichtspeicherzustand aufweist, wobei der Lager- und/oder Transportbehälter mindestens einen ersten Bereich, in dem das Wasserstoffspeichermaterial in einem mit Wasserstoff abgereicherten Nichtspeicherzustand vorliegt, mindestens einen zweiten Bereich, in dem das Wasserstoffspeichermaterial in einem mit Wasserstoff angereicherten Speicherzustand als Metallhydrid vorliegt, sowie mindestens eine Reaktionszone umfasst, in der das Wasserstoffspeichermaterial unter Energieaufnahme vom mit Wasserstoff angereicherten Speicherzustand in den mit Wasserstoff abgereicherten Nichtspeicherzustand und/oder unter Energieabgabe vom mit Wasserstoff abgereicherten Nichtspeicherzustand in den mit Wasserstoff angereicherten Speicherzustand überführt werden kann, wobei die mindestens eine Reaktionszone den mindestens einen ersten Bereich, in dem das Wasserstoffspeichermaterial in einem mit Wasserstoff abgereicherten Nichtspeicherzustand vorliegt, und den mindestens einen zweiten Bereich, in dem das Wasserstoffspeichermaterial in einem mit Wasserstoff angereicherten Speicherzustand als Metallhydrid vorliegt, verbindet, so dass das Wasserstoffspeichermaterial von dem mindestens einen ersten Bereich in den mindestens einen zweiten Bereich unter Wasserstoffabgabe bei gleichzeitiger Energieaufnahme und/oder unter Wasserstoffaufnahme bei gleichzeitiger Energieabgabe überführbar ist, wobei das Wasserstoffspeichermaterial als Pulver vorliegt und der Lager- und/oder Transportbehälter mindestens ein von einem Motor angetriebenes Flügelrad zur Überführung des Wasserstoffspeichermaterials von dem ersten Bereich, in dem das Wasserstoffspeichermaterial in einem mit Wasserstoff abgereicherten Nichtspeicherzustand vorliegt, in eine Reaktionszone umfasst und wobei die Reaktionszone mindestens ein Kühlelement und/oder mindestens ein Heizelement umfasst.

Der Erfindung liegt daher das Prinzip zu Grunde, dass das Wasserstoffspeichermaterial an den Ort der Reaktion gebracht wird und somit eine hohe Energieeffizienz und eine hohe Kontrollierbarkeit der Energiezufuhr und/oder -entnahme gewährleistet werden kann. Es ist bevorzugt, dass das Wasserstoffspeichermaterial in Pulverform vorliegt.

### Detaillierte Beschreibung der Erfindung

Die Erfindung wird nunmehr unter Bezugnahme auf die folgenden Figuren detailliert beschrieben, in denen

**Fig. 1** eine schematische Darstellung einer Ausführungsform der Erfindung ist und

**Fig.** 2 eine weitere schematische Darstellung einer Ausführungsform der Erfindung ist.

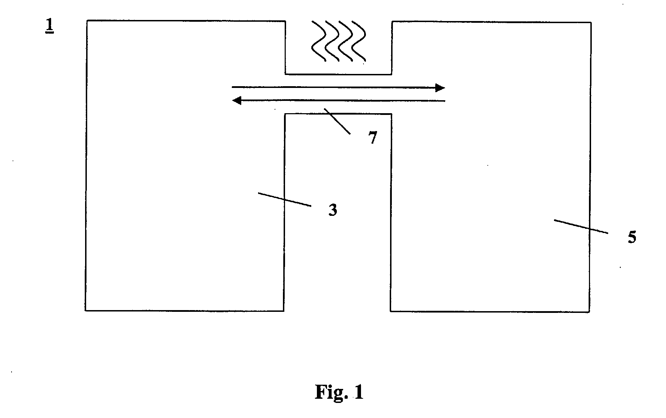

**Fig. 1** zeigt Lager- und/oder Transportbehälter für Wasserstoff **1** gemäß einer ersten Ausführungsform der Erfindung, wobei der Wasserstoff in Form eines Wasserstoffspeicher-materials gespeichert wird, das einen Speicherzustand und einen Nichtspeicherzustand aufweist. Der Lager- und/oder Transportbehälter **1** umfasst mindestens einen ersten Bereich **3**, in dem das Wasserstoffspeichermaterial in einem Nichtspeicherzustand vorliegt, mindestens einen zweiten Bereich **5**, in dem das Wasserstoffspeichermaterial in einem Speicherzustand in Form eines Metallhydrids vorliegt, sowie mindestens eine Reaktionszone **7**, in der das Wasserstoffspeichermaterial vom Nichtspeicherzustand in den Speicherzustand überführt werden kann. Die mindestens eine Reaktionszone **7** verbindet den mindestens einen ersten Bereich **3**, in dem das Wasserstoffspeichermaterial in einem Nichtspeicherzustand vorliegt, und den mindestens einen zweiten Bereich **5**, in dem das Wasserstoffspeichermaterial in einem Speicherzustand in Form eines Metallhydrids vorliegt, so dass das Wasserstoffspeichermaterial von dem mindestens einen ersten Bereich **3** in den mindestens einen zweiten Bereich **5** überführbar ist (was durch die Pfeile dargestellt wird). Die Energiezufuhr für die Überführung des Metallhydrid-Wasserstoffspeichermaterials vom Speicherzustand in den Nichtspeicherzustand erfolgt vorzugsweise durch Wärmeeintrag (was durch geschlängelte Linien dargestellt wird). Die Energieabfuhr für die Überführung des Wasserstoffspeichermaterials vom Nichtspeicherzustand in den Speicherzustand erfolgt vorzugsweise durch Kühlung. Dementsprechend umfasst der erfindungsgemäße Lager- und/oder Transportbehälter für Wasserstoff **1** im Bereich der Reaktionszone **7** mindestens ein Kühlelement und/oder mindestens ein Heizelement.

Speicherzustand bedeutet im Zusammenhang mit der vorliegenden Erfindung, dass das Wasserstoffspeichermaterial in einem mit Wasserstoff angereicherten Zustand in Form eines Metallhydrids vorliegt. Die kann prinzipiell jedes zur Zeit bekannte Metallhydrid sein, das im Wesentlichen reversibel in einen Nichtspeicherzustand überführt werden kann.

Nichtspeicherzustand bedeutet im Zusammenhang der vorliegenden Erfindung, das das Wasserstoffspeichermaterial in einem mit Wasserstoff abgereicherten Zustand vorliegt. Das mit Wasserstoff abgereicherte Wasserstoffspeichermaterial kann in Form eines reinen Metalls oder in Form eines anderen, von dem im Speicherzustand vorliegenden Wasserstoffspeichermaterial unterschiedliches Metallhydrids vorliegen.

Der Begriff Metall schließt im Zusammenhang mit der vorliegenden Erfindung auch Metalllegierungen ein.

Bekannte und bevorzugte Wasserstoffspeichermaterialien zur Verendung in allen Ausführungsformen der vorliegenden Erfindung sind beispielsweise die Matallhydride wie MgH₂, Alanate wie NaAlH₄, LiAlH₄, Ca (AlH₄)₂, La (AlH₄)₃, Borhydride wie LiBH₄, Ca(BH₄)₂, Mg(BH₄)₂, La(BH₄)₃ und gemischte Hydride wie 2 LiBH₄+MgH₂, Ca (BH₄) ₂+MgH₂ oder 2/3 La (BH₄) ₃+MgH₂.

Das Wasserstoffspeichermaterial ist vorzugsweise pulverförmig.

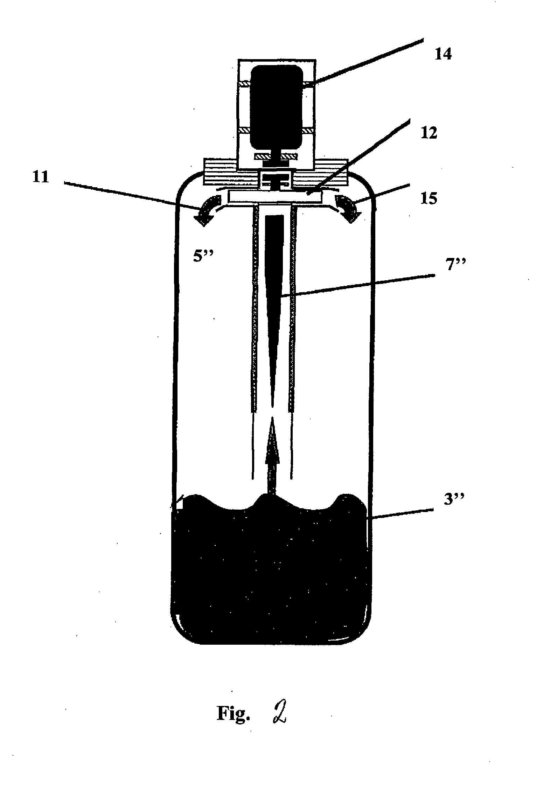

**Fig. 2** zeigt einen Lager- und/oder Transportbehälter für Wasserstoff, wobei das Wasserstoffspeichermaterial **5'** als Pulver vorliegt und mittels eines Flügelrads **12** von einem ersten Bereich **3"**, in dem das Wasserstoffspeichermaterial in einem Nichtspeicherzustand vorliegt in eine Reaktionszone **7"** geleitet wird, wobei das Flügelrad **12** von einem Motor **14** angetrieben wird. Nach der Reaktionszone passiert das Umgewandelte Wasserstoffspeichermaterial das Flügelrad **12** und gelangt über Austrittsöffnungen in Pfeilrichtung **15** in den zweiten Bereich 5".

Auch gemäß dieser Ausführungsform der vorliegenden Erfindung liegt das Wasserstoffspeichermaterial vorzugsweise pulverförmig vor.

Die erfindungsgemäßen Lager- und/oder Transportbehälter können als separates Gefäß verwendet werden, um verbrauchtes Wasserstoffspeichermaterial aus einem Tank unter hoher Energieeffizienz wieder aufzuladen. In diesem Fall wird das wieder aufgeladene Material in einen Tank überführt, wo es wieder entladen wird. Alternativ kann der erfindungsgemäß Lager-und/oder Transportbehälter als Wasserstoffspeichertank als solcher verwendet werden, wo das Wasserstoffspeichermaterial zumindest teilweise reversibel beladen und unter Energieabgabe in der Reaktionszone wieder entladen wird.

Gemäß einer weiteren Ausführungsform ist auch ein Verfahren zur Beladung eines Wasserstoffspeichermaterials unter Verwendung eines oben beschriebenen Lager- und/oder Transportbehälters Gegenstand der vorliegenden Erfindung, bei dem das Wasserstoffspeichermaterial in einem ersten Bereich (3) des Lager- und/oder Transportbehälters in einem mit Wasserstoff abgereicherten Nichtspeicherzustand vorliegt, von dort aus in eine Reaktionszone (7) überführt wird, wo es unter Abgabe von Energie mit Wasserstoff zu einem Metallhydrid umgewandelt wird, und anschließend weiter in einen zweiten Bereich (5) des Lager- und/oder Transportbehälters überführt wird.

Gemäß einer weiteren Ausführungsform ist auch ein Verfahren zur Entladung eines Metallhydrid-Wasserstoffspeichermaterials unter Verwendung eines oben beschriebenen Lager- und/oder Transportbehälters (1) Gegenstand der vorliegenden Erfindung, bei dem das Wasserstoffspeichermaterial in einem zweiten Bereich (5) des Lager- und/oder Transportbehälters in einem mit Wasserstoff angereicherten Speicherzustand als Metallhydrid vorliegt, von dort aus in eine Reaktionszone (7) überführt wird, wo es unter Eintrag von Energie und Wasserstoffabgabe in einen Nichtspeicherzustand überführt wird, und anschließend weiter in einen ersten Bereich (3) des Lager- und/oder Transportbehälters überführt wird.

## Patentansprüche

1. Lager- und/oder Transportbehälter (1) für Wasserstoff, wobei der Wasserstoff in Form eines Metallhydrid-Wasserstoffspeichermaterials gespeichert wird, das einen mit Wasserstoff angereicherten Speicherzustand und einen mit Wasserstoff abgereicherten Nichtspeicherzustand aufweist, wobei der Lager- und/oder Transportbehälter (1) mindestens einen ersten Bereich (3), in dem das Wasserstoffspeichermaterial in einem mit Wasserstoff abgereicherten Nichtspeicherzustand vorliegt, mindestens einen zweiten Bereich (5), in dem das Wasserstoffspeichermaterial in einem mit Wasserstoff angereicherten Speicherzustand als Metallhydrid vorliegt, sowie mindestens eine Reaktionszone (7) umfasst, in der das Wasserstoffspeichermaterial unter Energieaufnahme vom mit Wasserstoff angereicherten Speicherzustand in den mit Wasserstoff abgereicherten Nichtspeicherzustand und/oder unter Energieabgabe vom mit Wasserstoff abgereicherten Nichtspeicherzustand in den mit Wasserstoff angereicherten Speicherzustand überführt werden kann, wobei die mindestens eine Reaktionszone (7) den mindestens einen ersten Bereich (5), in dem das Wasserstoffspeichermaterial in einem mit Wasserstoff abgereicherten Nichtspeicherzustand vorliegt, und den mindestens einen zweiten Bereich (7), in dem das Wasserstoffspeichermaterial in einem mit Wasserstoff angereicherten Speicherzustand als Metallhydrid vorliegt, verbindet, so dass das Wasserstoffspeichermaterial von dem mindestens einen ersten Bereich (5) in den mindestens einen zweiten Bereich (7) unter Wasserstoffabgabe bei gleichzeitiger Energieaufnahme und/oder unter Wasserstoffaufnahme bei gleichzeitiger Energieabgabe überführbar ist, wobei das Wasserstoffspeichermaterial (5") als Pulver vorliegt und der Lager- und/oder Transportbehälter (1) mindestens ein von einem Motor (14) angetriebenes Flügelrad (12) zur Überführung des Wasserstoffspeichermaterials von dem ersten Bereich (3"), in dem das Wasserstoffspeichermaterial in einem mit Wasserstoff abgereicherten Nichtspeicherzustand vorliegt, in eine Reaktionszone (7") umfasst und wobei die Reaktionszone (7) mindestens ein Kühlelement und/oder mindestens ein Heizelement umfasst.

2. Verfahren zur Beladung eines Wasserstoffspeichermaterials unter Verwendung eines Lager- und/oder Transportbehälters (1) gemäß Anspruch 1, bei dem das Wasserstoffspeichermaterial in einem ersten Bereich (3) des Lager- und/oder Transportbehälters in einem mit Wasserstoff abgereicherten Nichtspeicherzustand vorliegt, von dort aus in eine Reaktionszone (7) überführt wird, wo es unter Abgabe von Energie mit Wasserstoff zu einem Metallhydrid umgewandelt wird, und anschließend weiter in einen zweiten Bereich (5) des Lager- und/oder Transportbehälters überführt wird.

3. Verfahren zur Entladung eines Metallhydrid-Wasserstoffspeichermaterials unter Verwendung eines Lager- und/oder Transportbehälters (1) gemäß Anspruch 1, bei dem das Wasserstoffspeichermaterial in einem zweiten Bereich (5) des Lager- und/oder Transportbehälters in einem mit Wasserstoff angereicherten Speicherzustand als Metallhydrid vorliegt, von dort aus in eine Reaktionszone (7) überführt wird, wo es unter Eintrag von Energie und Wasserstoffabgabe in einen Nichtspeicherzustand überführt wird, und anschließend weiter in einen ersten Bereich (3) des Lager- und/oder Transportbehälters überführt wird.

## Claims

1. Storage and/or a transport container (1) for hydrogen, wherein hydrogen is stored in the form of a metal hydride hydrogen storage material which has a hydrogen-enriched storage state and a hydrogen-depleted non-storage state, wherein the storage and/or transport container (1) comprises at least a first section (3), in which the hydrogen storage material is present in a hydrogen-depleted non-storage state, at least a second section (5) in which the hydrogen storage material is present in a hydrogen-enriched storage state in the form of a metal hydride, and at least one reaction zone (7); in which the hydrogen storage material is converted from the hydrogen-enriched storage state into the hydrogen-depleted non-storage state by taking-up energy and/or from the hydrogen-depleted non-storage state into the hydrogen-enriched storage state by releasing energy, wherein the least one reaction zone (7) connects the at least one first section (3), in which the hydrogen storage material is present in a hydrogen-depleted non-storage state, and the at least one second section (5), in which the hydrogen storage material is present in a hydrogen-enriched storage state in the form of a metal hydride, in a way that the hydrogen storage material can be transferred from the at least one first section (3) into the at least one second section (5) by releasing hydrogen and simultaneous energy uptake and/or under hydrogen uptake and simultaneously energy release, wherein the hydrogen storage material (5") is present in the form of a powder and the storage and/or transport container (1) comprises at least a motor (14) driven impeller (12) for transferring the hydrogen storage material from the first section (3") in which the hydrogen storage material is present in a hydrogen-depleted non-storage state, into a reaction zone (7"), and wherein the reaction zone (7) comprises at least one cooling element and/or at least one heating element.

2. Process for the loading of a hydrogen storage material using a storage and/or transport container (1) according to claim 1, wherein the hydrogen storage material is present in a first section (3) of the storage and/or transport container in a hydrogen-depleted non-storage state, from which it is transferred to a reaction zone (7), where it is converted with hydrogen to a metal hydride by releasing energy, and thereafter into a second section (5) of the storage and/or transport container.

3. Process for discharging a metal hydride hydrogen storage material using a storage and/or transport container (1) according to claim 1, wherein the hydrogen storage material is present in a second section (5) of the storage and/or transport container in a hydrogen-enriched storage state as a metal hydride, from which it is transferred into a reaction zone (7), wherein it is converted by taking-up energy and releasing hydrogen into a non-storage state, and thereafter into a first section (3) of the storage and transport container.

## Revendications

1. Récipient de stockage et/ou de transport (1) pour de l'hydrogène, l'hydrogène étant stocké sous la forme d'un matériau hydrure métallique de stockage d'hydrogène qui présente un état de stockage enrichi en hydrogène et un état de non-stockage appauvri en hydrogène, le récipient de stockage et/ou de transport (1) comprenant au moins une première zone (3) dans laquelle le matériau de stockage d'hydrogène est présent à un état de non-stockage appauvri en hydrogène, au moins une deuxième zone (5) dans laquelle le matériau de stockage d'hydrogène est présent sous forme d'hydrure métallique, à un état de stockage enrichi en hydrogène, ainsi qu'au moins une zone de réaction (7) dans laquelle le matériau de stockage d'hydrogène peut être amené, avec absorption d'énergie, de l'état de stockage enrichi en hydrogène à l'état de non-stockage appauvri en hydrogène et/ou, avec libération d'énergie, de l'état de non-stockage appauvri en hydrogène à l'état de stockage enrichi en hydrogène, la zone de réaction (7), au nombre d'au moins une, reliant la première zone (3), au nombre d'au moins une, dans laquelle le matériau de stockage d'hydrogène est présent à un état de non-stockage appauvri en hydrogène, et la deuxième zone (7), au nombre d'au moins une, dans laquelle le matériau de stockage d'hydrogène est présent sous forme d'hydrure métallique, à un état de stockage enrichi en hydrogène, de sorte que le matériau de stockage d'hydrogène peut être amené de la première zone (5), au nombre d'au moins une, dans la deuxième zone (7), au nombre d'au moins une, en libérant de l'hydrogène, tout en absorbant en même temps de l'énergie et/ou en absorbant de l'hydrogène, tout en libérant de l'énergie, le matériau de stockage d'hydrogène (5") étant présent sous forme de poudre, et le récipient de stockage et/ou de transport (1) comprenant au moins une roue à palettes (12) entraînée par un moteur (14) et destinée à amener le matériau de stockage d'hydrogène de la première zone (3"), dans laquelle le matériau de stockage d'hydrogène est présent à un état de non-stockage appauvri en hydrogène, dans une zone de réaction (7"), et la zone de réaction (7) comprenant au moins un élément de refroidissement et/ou au moins un élément chauffant.

2. Procédé de chargement d'un matériau de stockage d'hydrogène, en utilisant un récipient de stockage et/ou de transport (1) selon la revendication 1, selon lequel le matériau de stockage d'hydrogène est présent dans une première zone (3) du récipient de stockage et/ou de transport, à un état de non-stockage appauvri en hydrogène, est transporté à partir de cette zone dans une zone de réaction (7), où il est transformé avec de l'hydrogène en un hydrure métallique, en libérant de l'énergie, et est ensuite amené dans une deuxième zone (5) du récipient de stockage et/ou de transport.

3. Procédé de déchargement d'un matériau hydrure métallique de stockage d'hydrogène, en utilisant un récipient de stockage et/ou de transport (1) selon la revendication 1, selon lequel le matériau de stockage d'hydrogène est présent dans une deuxième zone (5) du récipient de stockage et/ou de transport, à un état de stockage enrichi en hydrogène, en tant qu'hydrure métallique, est transporté à partir de cette zone dans une zone de réaction (7), où il est amené à un état de non-stockage, avec apport d'énergie et libération d'hydrogène, et est ensuite amené dans une première zone (3) du récipient de stockage et/ou de transport.
